# EUROPEAN PATENT APPLICATION

(11) **EP 4 772 762 A1**
(43) Date of publication of application: **08.07.2026**
(21) Application number: 24859594.4
(22) Date of filing: 22.08.2024
(51) Int. Cl.: F16C 41/00, F16C 19/04

(54) **BEARING DEVICE**

(30) Priority: 30.08.2023 JP 2023139728
(71) Applicant: NTN Corporation, Osaka-shi Osaka 530-0005 (JP)
(72) Inventor: KOIKE, Takashi, Iwata-shi, Shizuoka 438-8510 (JP); FUKUSHIMA, Yasuyuki, Iwata-shi, Shizuoka 438-8510 (JP)
(74) Representative: Grünecker Patent- und Rechtsanwälte PartG mbB
(86) International application number: PCT/JP2024/029799
(87) International publication number: WO 2025/047561

(57) **Abstract**

Provided is a bearing device in which a magnetic ring is attached to a rotary member, a sensor unit, including a sensor, a wireless communication circuit, a power supply circuit, and a stator, is attached to a counterpart member, with the stator and the magnetic ring being radially opposed to each other. In the bearing device, the dimensions of the sensor unit are limited so as to reduce the space required for arranging the sensor unit and the magnetic ring. In the sensor unit (4), the stator (7) has a finite circumferential length. The stator (7), the sensor (11), the wireless communication circuit (12), and the power supply circuit (13) are arranged along a common circumference.

## Description

### TECHNICAL FIELD

The present invention relates to a bearing device comprising a bearing and a sensor unit.

### BACKGROUND ART

Conventionally, a bearing device is known that comprises a rolling bearing and a sensor unit in which a circuit board, on which a sensor configured to detect conditions of the rolling bearing and a wireless module are mounted, is accommodated, wherein a magnetic ring of a claw-pole power generator is connected to a rotary ring of the rolling bearing, a stator of the claw-pole power generator is disposed on the sensor unit, and the sensor unit is connected to a stationary ring of the rolling bearing (see, for example, the below-identified Patent Document 1).

The bearing device disclosed in Patent Document 1 is configured to convert rotary motion of the rotary ring relative to the stationary ring into alternating-current power by the stator and the magnetic ring that are radially opposed to each other, to convert this alternating-current power into direct-current power by a power supply circuit on the circuit board, and to supply the direct-current power to the sensor and the wireless module, thereby enabling wireless monitoring of conditions of the rolling bearing. In particular, since the sensor, other associated components, and the stator are not disposed radially side by side, but are arranged at axially different positions, an increase in the outer diameter of the sensor unit can be prevented. Accordingly, even if the bearing has a small outer diameter, the stator of the sensor unit and the magnetic ring can be radially opposed to each other.

### PRIOR ART DOCUMENT(S)

### PATENT DOCUMENT(S)

Patent Document 1: Japanese Unexamined Patent Application Publication No. 2022-156079

### SUMMARY OF THE INVENTION

### PROBLEMS TO BE SOLVED BY THE INVENTION

However, in the bearing device disclosed in Patent Document 1, since the sensor and other associated components of the sensor unit and the stator are located at axially offset positions relative to each other, the axial width of the sensor unit increased. Accordingly, if the space available for installing the sensor unit has a small axial width, there is a problem that it becomes difficult to use the sensor unit disclosed in Patent Document 1.

When the sensor, other associated components, and the stator are arranged at the same axial position, the axial width of the sensor unit may be reduced. However, in the case of a bearing with a small outer diameter, such as a small bearing, it becomes difficult to secure a space capable of arranging the sensor, other associated components, the stator, the air gap, and the magnetic ring at the same axial position within the range between the inner and outer diameters of the bearing. Even when the sensor unit and the magnetic ring are arranged between the rotary-side spacer and the stationary-side spacer of the bearing device, since the spacer adjacent to the small bearing has a small width and a small diameter, a similar problem may arise.

It is an object of the present invention to provide a bearing device in which a magnetic ring is attached to a rotary member, and a sensor unit, including a sensor, a wireless communication circuit, a power supply circuit, and a stator, is attached to a counterpart member, with the stator and the magnetic ring being radially opposed to each other, wherein the dimensions of the sensor unit are limited so as to reduce the space required for arranging the sensor unit and the magnetic ring.

### MEANS FOR SOLVING THE PROBLEMS

In order to achieve the above object, the present invention provides a bearing device comprising: a rotary member; a bearing rotatably supporting the rotary member; a counterpart member arranged coaxially with the rotary member; a sensor unit attached to the counterpart member; and a power generator configured to convert rotary motion of the rotary member into alternating-current power, wherein the sensor unit includes an accommodation portion that accommodates a sensor, a wireless communication circuit configured to transmit a detection result of the sensor, and a power supply circuit configured to convert the alternating-current power into direct-current power, wherein the power generator includes a magnetic ring configured to rotate in unison with the rotary member; and a stator disposed in the sensor unit, and wherein the magnetic ring and the stator are arranged at positions radially opposed to each other, characterized in that the stator has a finite circumferential length, and the stator, the sensor, the wireless communication circuit, and the power supply circuit are arranged along a common circumference (arrangement 1).

As in the above arrangement 1, the stator has a finite circumferential length, and the stator, the sensor, the wireless communication circuit, and the power supply circuit are arranged along a common circumference. Accordingly, the axial width of the sensor unit can be reduced without increasing the diameter of the sensor unit. As a result, the space required for arranging the sensor unit and the magnetic ring is reduced.

In the above arrangement 1, an arrangement 2 may be used in which the stator includes a yoke and a coil which are arranged at positions radially opposed to the magnetic ring, wherein the yoke includes first claw poles and second claw poles alternately arranged at circumferential intervals; a first side wall extending radially from the first claw poles toward a side opposite from the magnetic ring; a second side wall extending radially from the second claw poles toward the side opposite from the magnetic ring; and a connection wall extending between the first side wall and the second side wall, with a finite circumferential length, and wherein the coil includes a first coil portion circumferentially extending between the first side wall and the second side wall, and a second coil portion circumferentially extending through a position opposite from the magnetic ring beyond the connection wall, and the coil is arranged around the connection wall. With this arrangement 2, the claw-pole power generator can have a finite circumferential length.

In the above arrangement 2, an arrangement 3 may be used in which the yoke comprises a first magnetic member, and a second magnetic member having a finite circumferential length, wherein the first magnetic member includes an annular side plate portion including the first side wall; the first claw poles, which are located on a side of the annular side plate portion closer to the magnetic ring, and which extend toward a first axial side; a circumferential plate portion located on the side of the annular side plate portion closer to the magnetic ring, and extending toward the first axial side, the circumferential plate portion extending circumferentially along a common circumference to the first claw poles so as to have a finite circumferential length; and an annular plate portion located on a side of the annular side plate portion opposite from the magnetic ring, and extending toward the first axial side, wherein the second magnetic member includes the second side wall; the second claw poles, which are located on the side of the second side wall closer to the magnetic ring, and which extend toward a second axial side; and the connection wall, which is located on the side of the second side wall opposite from the magnetic ring, and which extends toward the second axial side, and wherein the sensor, the wireless communication circuit, and the power supply circuit are accommodated between the annular plate portion and the circumferential plate portion of the first magnetic member. With this arrangement 3, the accommodation portion for accommodating the sensor, other associated components, and the yoke can be arranged along the common circumference with only the first magnetic member and the second magnetic member, that is, with two members.

In the above arrangement 3, an arrangement 4 may be used in which the sensor unit includes a circular arc-shaped bobbin axially superposed on the annular side plate portion, wherein the circular arc-shaped bobbin has a first groove radially supporting the first coil portion; a second groove radially supporting the second coil portion; and a partition having a slit formed between the first groove and the second groove, the slit axially extending through the partition, and wherein the connection wall extends through the slit so as to reach the annular side plate portion. With this arrangement 4, it is possible both to maintain the coil in a form arranged around the connection wall with the support of the circular arc-shaped bobbin and to form the yoke by combining the first magnetic member and the second magnetic member.

In any one of the above arrangements 1 to 4, an arrangement 5 may be used in which the rotary member comprises a first raceway ring, the counterpart member comprises a second raceway ring, and the bearing is a rolling bearing including rolling elements arranged between the rotary member and the counterpart member, wherein the rotary member and the counterpart member have stepped ends opposed radially to each other, wherein the magnetic ring is fitted to the stepped end of the rotary member so as not to protrude axially from the rotary member, and wherein the sensor unit is fitted to the stepped end of the counterpart member so as not to protrude axially from the counterpart member. With this arrangement 5, the sensor unit and the magnetic ring can be accommodated in the bearing without increasing the outer diameter of the bearing, by utilizing the expanded annular space in the bearing created by the stepped ends of the rotary member and the counterpart member. Thus, it is possible to realize a compact bearing device.

### EFFECTS OF THE INVENTION

As mentioned above, according to the present invention, by using the above arrangement 1, in the bearing device in which the magnetic ring is attached to the rotary member and the sensor unit, including the sensor, the wireless communication circuit, the power supply circuit, and the stator, is attached to the counterpart member, with the stator and the magnetic ring being radially opposed to each other, the space required for arranging the sensor unit and the magnetic ring can be reduced.

### BRIEF DESCRIPTION OF THE DRAWINGS

Fig. 1 is a perspective view of the bearing device according to the first embodiment of the present invention, shown with the cover in a detached state.
Fig. 2 is a longitudinal sectional front view of the bearing device of Fig. 1, illustrating a region near the sensor unit.
Fig. 3 is an exploded perspective view of the bearing device of Fig. 1, illustrating the sensor unit and the magnetic ring in a detached state.
Fig. 4 is a perspective view of the bearing device of Fig. 1, illustrating the cover and other components attached to the sensor unit.
Fig. 5 is an exploded perspective view of the sensor unit of Fig. 1.
Fig. 6 is a longitudinal sectional front view of the sensor unit of Fig. 1, illustrating a region near the stator.
Fig. 7 is a perspective view of the sensor unit of Fig. 1, shown in a partially assembled state.
Fig. 8 is a side view of the bearing device of Fig. 1.
Fig. 9 is a longitudinal sectional front view of the bearing device of Fig. 1.
Fig. 10 is a sectional view of the bearing device according to second embodiment of the present invention.

### BEST MODE FOR CARRYING OUT THE INVENTION

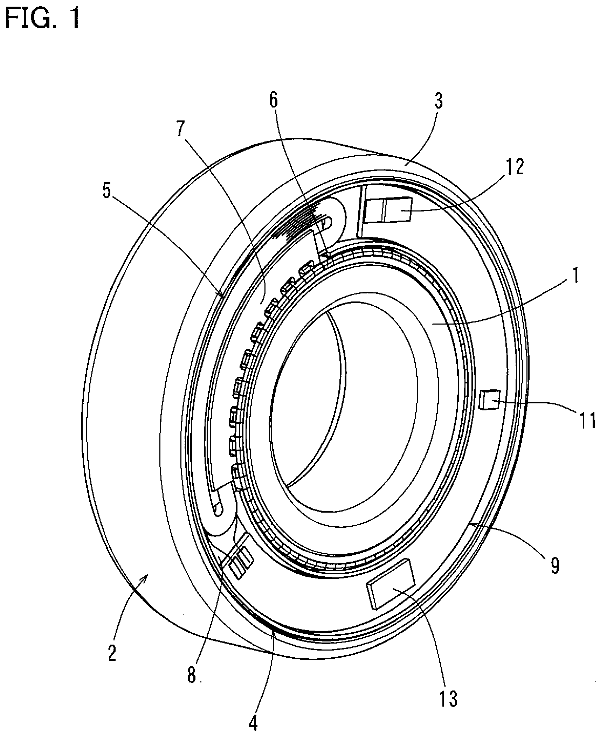

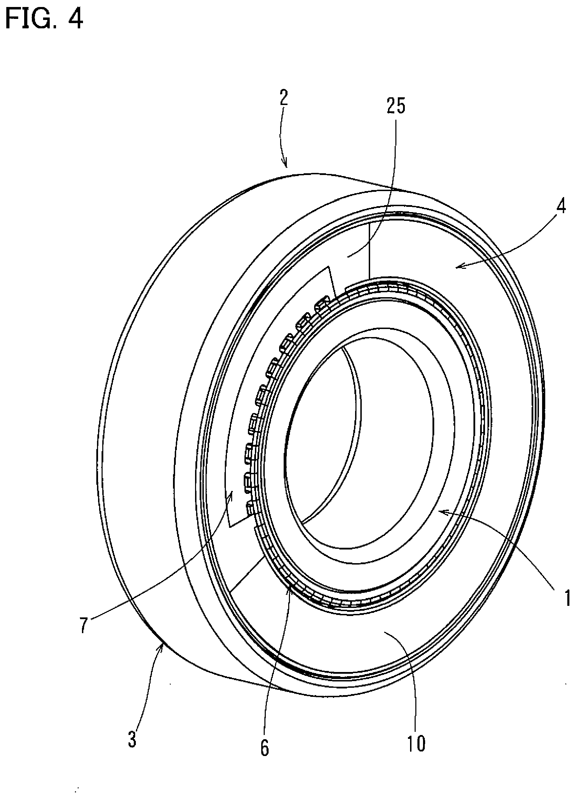

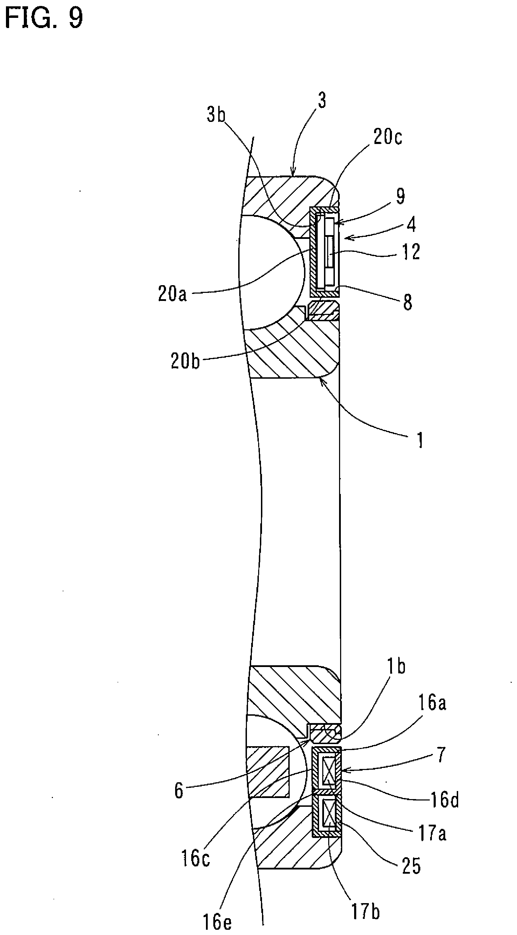

The bearing device according to the first embodiment as an example of the present invention (hereinafter simply referred to as "this bearing device") will be described with reference to Figs. 1 to 9 of the accompanying drawings.

As shown in Figs. 1 to 3, this bearing device includes a rotary member 1, a bearing 2, a counterpart member 3 arranged coaxially with the rotary member 1, a sensor unit 4 attached to the counterpart member 3, and a power generator 5.

In this description, the direction around the rotary center axis of the rotary member 1 is referred to as the "circumferential direction", "circumferential" or "circumferentially". The direction along the rotary center axis is referred to as the "axial direction", "axial" or "axially". The direction orthogonal to the rotary center axis is referred to as the "radial direction", "radial" or "radially".

The rotary member 1 is a member that rotates circumferentially relative to the counterpart member 3.

The bearing 2 is a mechanism for rotatably supporting the rotary member 1 in the circumferential direction.

The counterpart member 3 is a member arranged coaxially with the rotary member 1.

The sensor unit 4 is a unit comprising a built-in electric circuit powered by the power generator 5, the electric circuit being configured to detect at least one of a physical quantity and a chemical quantity associated with the condition of the bearing 2, and to wirelessly transmit the detection result.

The power generator 5 comprises a magnetic ring 6 arranged to rotate in unison with the rotary member 1, and a stator 7 opposed radially to the magnetic ring 6 with a magnetic gap therebetween, whereby rotary motion of the rotary member 1 is electromagnetically converted into alternating-current power by the magnetic ring 6 and the stator 7.

As shown in Figs. 1 to 4, the sensor unit 4 includes an accommodation portion 8 for accommodating a circuit board 9, and a cover 10 for covering the circuit board 9.

As shown in Figs. 1, 2 and 5, the circuit board 9 is a printed circuit board on which the aforementioned electric circuit is formed. The circuit board 9 includes at least one sensor 11 configured to convert the aforementioned physical or chemical quantity into an electric signal, a wireless communication circuit 12 configured to transmit a detection result of the sensor 11, and a power supply circuit 13 for converting the aforementioned alternating-current power into direct current power. The sensor 11 and the other components are surface-mounted on one surface of the printed circuit board, which has a circular-arc shape that is short in the radial direction and long in the circumferential direction.

Examples of the sensor 11 include, e.g., an acceleration sensor for detecting radial or axial acceleration to monitor vibration of the bearing 2, and a temperature sensor for monitoring the temperature of the bearing 2. An electronic component including both the acceleration sensor and the temperature sensor may be mounted as the sensor 11. Alternatively, the acceleration sensor and the temperature sensor may be mounted as separate electronic components. If the acceleration sensor is used, it is preferable that the acceleration sensor not be in contact with other components, such as a sealing member, for the purpose of enabling the sensor to accurately detect the vibration caused by the bearing 2.

The wireless communication circuit 12 comprises a communication circuit configured to convert predetermined information, such as the detection result of the sensor 11, into an electric wave and radiate the electric wave from an antenna. The wireless communication circuit 12 conforms to a predetermined communication protocol, and is generally provided in the form of a module. It is preferable that the antenna of the wireless communication circuit 12 not be in contact with other components, such as a sealing member, for the purpose of preventing degradation of wireless communication performance.

The power supply circuit 13 converts alternating-current power generated by the stator 7 through rotation of the magnetic ring 6, into direct current power for use in the circuit board 9, and supplies the direct current power to the sensor 11, the wireless communication circuit 12, and other associated components. A battery may be accommodated in the accommodation portion 8 as a backup power source for the power generator 5.

The accommodation portion 8 comprises a recess defining a space open on one side surface of the sensor unit 4. The accommodation portion 8 has a depth and a bottom area that enable the accommodation portion 8 to accommodate the entire circuit board 9.

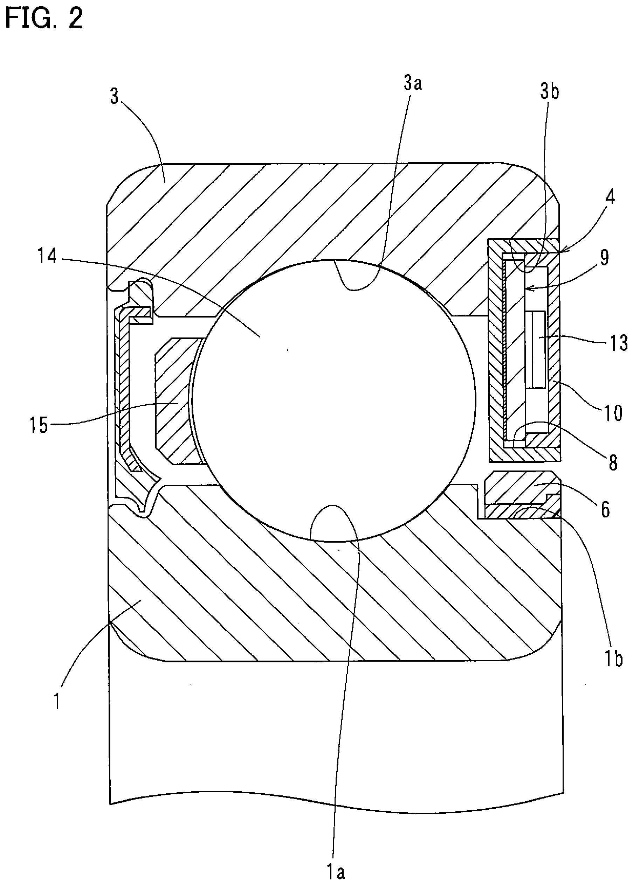

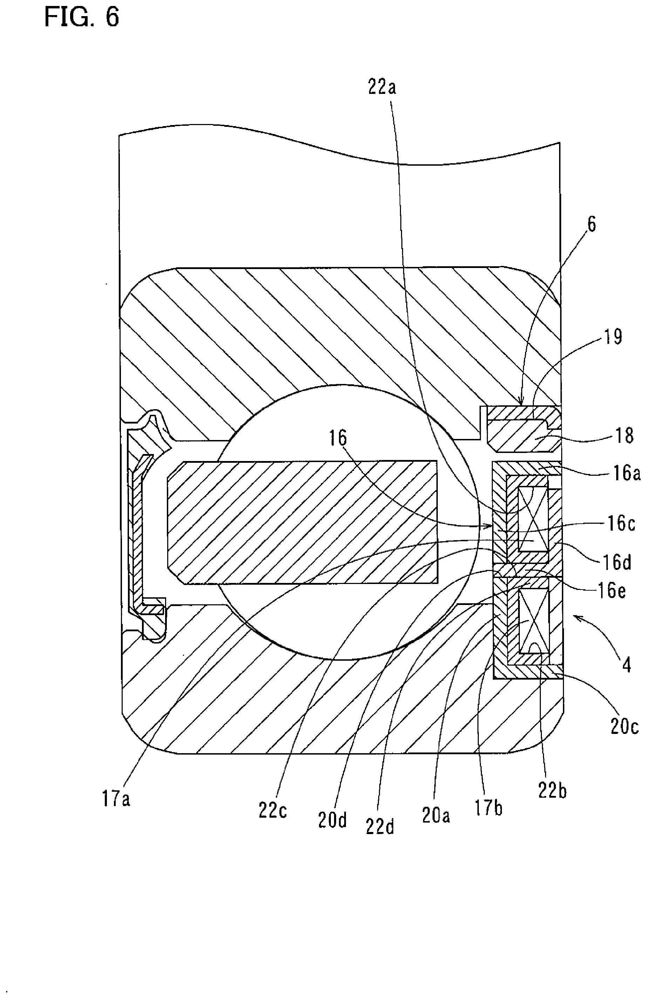

As shown in Figs. 2, 3 and 6, the aforementioned rotary member 1 comprises a first raceway ring arranged as a rotary ring. The counterpart member 3 comprises a second raceway ring arranged as a stationary ring. The bearing 2 is a rolling bearing including at least two rolling elements 14 disposed between a raceway surface 1a formed on the rotary member 1 and a raceway surface 3a formed on the counterpart member 3. These rolling elements 14 are circumferentially retained at equal intervals by a cage 15. The cage 15 is a crown-shaped cage including a ring portion only on the side of the rolling elements 14 opposite from the sensor unit 4 (i.e., the side remoter from the sensor unit 4, or the left side in Figs. 2 and 6).

The bearing 2 is a radial bearing. In addition, the bearing 2 is a standard bearing conforming to a specific standard. In this description, the term "standard bearing" refers to a bearing that satisfies the dimensions defined in the ISO standard or the JIS standard. For example, the dimensions of a radial bearing other than a tapered roller bearing are defined in ISO 15 or JIS B 1512-1.

While a deep groove ball bearing is exemplified as the bearing 2, the bearing 2 is not limited to the deep groove ball bearing. In addition, the rotary member and the counterpart member are not limited to raceway rings, and may be, e.g., an inner ring spacer and an outer ring spacer.

The magnetic ring 6 is a rotor for generating a rotating magnetic field relative to the stator 7. The magnetic ring 6 is fixed to the rotary member 1. The stator 7 of the power generator 5 is a stator for guiding magnetic flux that emanates from the magnetic ring 6 through a yoke 16 and inducing an alternating-current voltage in a coil 17.

The magnetic ring 6 includes a magnet 18 that is magnetized with circumferentially alternating N and S poles, and a metal core 19 that radially supports the peripheral surface of the magnet 18 on the side opposite from the stator 7 (i.e., the peripheral surface on the side remoter from the stator 7, the lower-side peripheral surface in Fig. 2, or the upper-side peripheral surface in Fig. 6). The magnet 18 is formed of a magnetic rubber extending circumferentially. The magnet 18 is bonded to the metal core 19. As a bonding method, vulcanization bonding may be used.

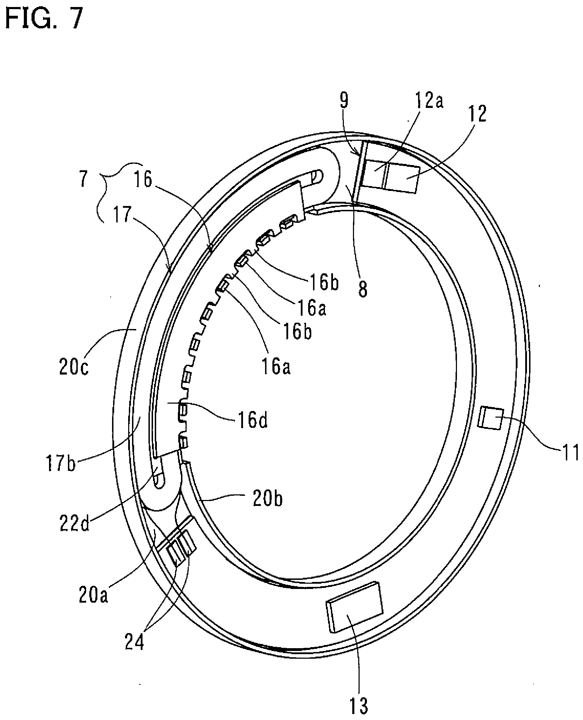

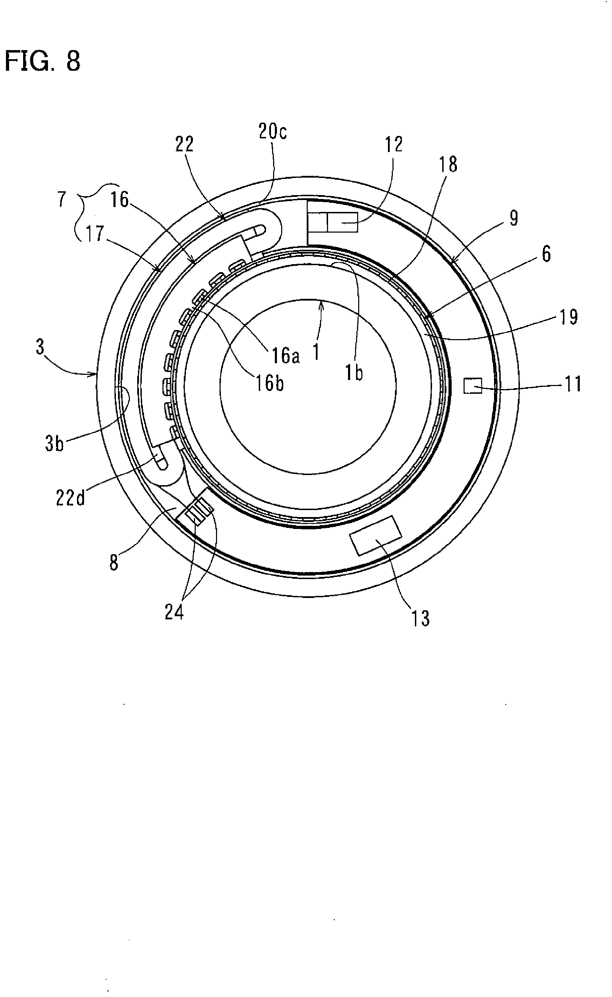

As shown in Figs. 7 and 8, the stator 7 comprises the yoke 16 and the coil 17. The yoke 16 and the coil 17 are arranged at positions radially opposed to the magnetic ring 6.

As shown in Figs. 6 and 7, the yoke 16 comprises first claw poles 16a and second claw poles 16b which are alternately arranged at circumferential intervals; a first side wall 16c extending radially from the first claw poles 16a toward the side opposite from the magnetic ring 6 (i.e., the side remoter from the magnetic ring 6, or the lower side in Fig. 6); a second side wall 16d extending radially from the second claw poles 16b toward the side opposite from the magnetic ring 6; and a connection wall 16e extending between the first side wall 16c and the second side wall 16d, with a finite circumferential length. The first claw poles 16a and the second claw poles 16b are arranged at positions radially opposed to the connection wall 16e, and the first side wall 16c and the second side wall 16d are axially opposed to each other.

The coil 17 includes a first coil portion 17a circumferentially extending between the first side wall 16c and the second side wall 16d, and a second coil portion 17b circumferentially extending through a position opposite from the magnetic ring 6 (i.e., on the lower side in Fig. 6) beyond the connection wall 16e, and the coil 17 is arranged around the connection wall 16e.

The yoke 16 comprises a first magnetic member 20, and a second magnetic member 21 having a finite circumferential length.

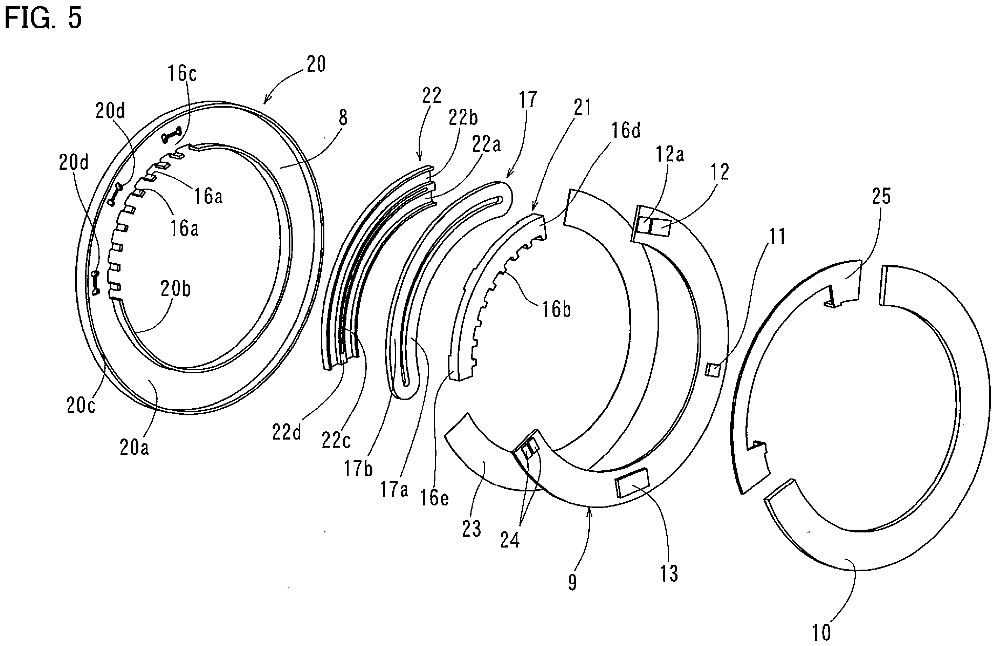

As shown in Figs. 5 and 6, the first magnetic member 20 seamlessly and integrally includes an annular side plate portion 20a including the first side wall 16c; the first claw poles 16a, which are located on the side of the annular side plate portion 20a closer to the magnetic ring 6 (i.e., on the upper side in Fig. 6), and which extend toward one axial side (i.e., the right side in Figs. 5 and 6); a circumferential plate portion 20b located on the side of the annular side plate portion 20a closer to the magnetic ring 6, the circumferential plate portion 20b extending toward the one axial side and extending circumferentially along a common circumference to the first claw poles 16a so as to have a finite circumferential length; and an annular plate portion 20c located on the side of the annular side plate portion 20a opposite/remoter from the magnetic ring 6 (i.e., on the lower side in Fig. 6), and extending toward the one axial side.

The second magnetic member 21 seamlessly and integrally includes the second side wall 16d; the second claw poles16b, which are located on the side of the second side wall 16d closer to the magnetic ring 6, and which extend toward the other axial side (i.e., the left side in Figs. 5 and 6); and the connection wall 16e, which is located on the side of the second side wall 16d opposite/remoter from the magnetic ring 6 (i.e., the lower side in Fig. 6), and which extends toward the other axial side.

These magnetic members 20 and 21 are each formed from a single magnetic plate, such as a steel plate. Each of the magnetic members 20 and 21 is entirely formed by press-molding.

The accommodation portion 8 is constituted by the annular plate portion 20c, the circumferential plate portion 20b, and the annular side plate portion 20a. The outer periphery of the sensor unit 4 is defined by the annular plate portion 20c, and the inner periphery of the sensor unit 4 is defined by the circumferential plate portion 20b, the first claw poles 16a, and the second claw poles 16b.

The circumferential plate portion may be omitted. Since the circumferential plate portion 20b, which is formed of a magnetic material, serves as a magnetic shield that reduces the influence of the magnetic field of the magnetic ring 6 on the sensor 11, the wireless communication circuit 12, and other components, it is preferable that the sensor 11, the wireless communication circuit 12, and other components be arranged between the circumferential plate portion 20b and the annular plate portion 20c.

Holes 20d that extend through both side surfaces of the annular side plate portion 20a are formed at multiple circumferential positions. The connection wall 16e includes a plurality of protrusions fitted on the inner surfaces of the respective holes 20d, which extend circumferentially into a circular-arc shape. The majority of the connection wall 16e, excluding these protrusions, is in axial abutment with the annular side plate portion 20a.

The sensor unit 4 includes a circular arc-shaped bobbin 22 axially superposed on the annular side plate portion 20a. The circular arc-shaped bobbin 22 seamlessly and integrally has a first groove 22a that radially supports the first coil portion 17a; a second groove 22b that radially supports the second coil portion 17b; and a partition 22d having a slit 22c formed between the first groove 22a and the second groove 22b, the slit 22c axially extending through the partition 22d. The first groove 22a, the second groove 22b, the slit 22c, and the partition 22d extend circumferentially parallel to one another. The entire circular arc-shaped bobbin 22 is formed of a resin.

The circular arc-shaped bobbin 22 is in contact with the annular plate portion 20c along its entire circumferential length, and is in radial contact with the respective first claw poles 16a. Due to these contacts, the circular arc-shaped bobbin 22 is positioned radially relative to the first magnetic member 20 so that the slit 22c is in axial communication with the holes 20d. The connection wall 16e extends to the annular side plate portion 20a through the slit 22c.

The circular arc-shaped bobbin 22 radially covers, from the side opposite/remoter from the magnetic ring 6, respective slits defined between both circumferential ends of the circumferential plate portion 20b, specifically the slit defined between one circumferential end of the circumferential plate portion 20b and the adjacent first second claw pole 16a, the slit defined between the other circumferential end of the circumferential plate portion 20b and the adjacent second claw pole 16b, and the slits defined between circumferentially adjacent pairs of the first and second claw poles 16a and 16b, and the bobbin generally closes these slits. Accordingly, the circular arc-shaped bobbin 22 contributes to preventing foreign matter from entering the stator 7 through these slits. If the coil 17 is to be protected for insulation, heat resistance, dust prevention, moisture prevention, and wear prevention, a varnish treatment may be used, in which the coil 17 is coated by dipping the coil 17 into varnish or by dropping varnish onto the coil 17. In addition, without using the circular arc-shaped bobbin 22, an insulation-coated coil may be used and arranged directly around the connection wall 16e.

As shown in Figs. 6, 8, and 9, the first claw poles 16a and the second claw poles 16b are radially opposed to the magnet 18 with an air gap therebetween. The first claw poles 16a and the second claw poles 16b extend in opposite axial directions, and are circumferentially and alternately arranged. A circumferential air gap is defined between each circumferentially adjacent pair of the first and second claw poles 16a and 16b. The total number of the first claw poles 16a and the second claw poles 16b is the same as the pole number of the magnet 18 (i.e., the total number of N and S poles).

For example, the magnetic flux emanating from the N pole of the magnet 18 enters each of the first claw poles 16a (or each of the second claw poles 16b), which serve as magnetic poles. The flux then proceeds to the first side wall 16c (or the second side wall 16d), passes through the connection wall 16e, reaches the second side wall 16d (or the first side wall 16c). As a result, the flux travels around the first coil portion 17a of the coil 17, then reaches the adjacent second claw pole 16b (or the adjacent first claw pole 16a), and finally returns to the S pole of the magnet 18. When the N and S pole positions of the magnet 18 are interchanged by rotation of the rotary member 1, the magnetic flux direction is reversed. The alternating magnetic field generated in this manner induces an alternating-current voltage across both winding ends of the coil 17. While a radial type claw-pole power generator is exemplified as the power generator 5, other types of power generators may alternatively be used.

Due to small variations in the radial gap between the magnetic ring 6, which is fixed to the rotary member 1 (i.e., a component of the radial bearing), and the stator 7 of the sensor unit 4, which is fixed to the counterpart member 3 (i.e., a component of the bearing 2), the power generator 5 can ensure a stable amount of power generated. That is, the play of the cage 15 (i.e., the expansion of pocket clearance) accompanying the elapsed operating time of the bearing 2 normally tends to increase more in the axial direction than in the radial direction. For a power generator in which the magnetic ring and the stator are axially opposed to each other, the axial air gap between the magnetic ring and the stator is prone to vary due to the play of the cage accompanying the elapsed operating time of the bearing. If the air gap increases, the operation of electronic components, such as a sensor, may be affected due to a decrease in the amount of power generated. On the other hand, if the air gap decreases, the magnetic ring and the stator could come into contact with each other.

As shown in Figs. 7 and 8, since the stator 7 has a finite circumferential length, the amount of power generated is reduced compared to a stator provided to extend around the entire circumference. In order to increase the amount of power generated, the magnetic strength of the magnet 18 can be increased. For example, as the magnet 18 of the magnetic ring 6, a magnetic rubber, in which a rare-earth magnetic powder with a high magnetic flux density (e.g., samarium-based Sm-Fe-N) is mixed with a rubber, or a sintered rare-earth magnet (e.g., neodymium magnet) may be used. The "finite circumferential length of the stator 7" is determined based on the size of the circuit board 9 and the required amount of power to be generated. First, the installation space for the circuit board 9 is ensured, and then the length of the stator 7 is determined based on the required amount of power to be generated. Specifically, the angular span of the stator 7 is approximately 90° to 180°.

The circuit board 9, which includes the sensor 11, the wireless communication circuit 12, and the power supply circuit 13, is accommodated between the annular plate portion 20c and the circumferential plate portion 20b. That is, the accommodation portion 8 is constituted by the annular side plate portion 20a, the circumferential plate portion 20b, and the annular plate portion 20c. The accommodating space of the accommodation portion 8 (i.e., the space radially and axially surrounded on three sides by these plate portions 20a to 20c) is in circumferential communication with the space accommodating the coil 17. An insulating sheet 23 (see Fig. 5), such as a polyimide film, is interposed between the circuit board 9 and the annular side plate portion 20a.

As shown in Fig. 7, both ends of the coil 17 are connected to terminals 24 disposed on one surface of the circuit board 9. The input terminals of the power supply circuit 13 are the terminals 24. The respective power sources of the sensor 11 and the wireless communication circuit 12 are the output terminals of the power supply circuit 13.

The bearing device may be designed such that a battery is accommodated in the accommodation portion 8, and the battery is charged by the power generator 5, or in an emergency in which power generation by the power generator 5 becomes insufficient or stops, direct current power of the battery is supplied to the power supply circuit 13.

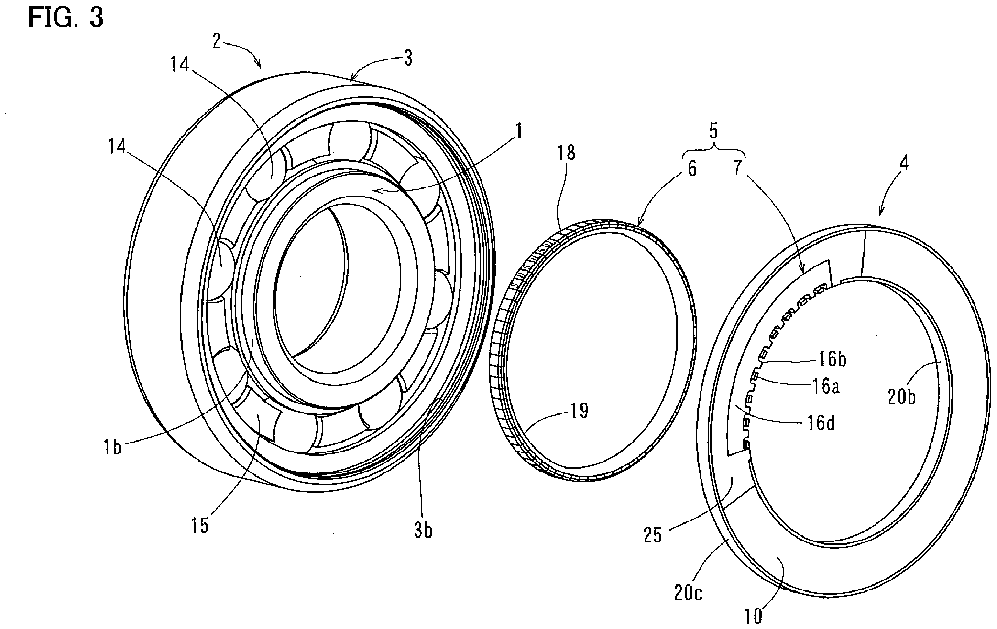

As shown in Figs. 3 to 5, the cover 10 is formed into a circular-arc shape so as to fit between the annular plate portion 20c and the circumferential plate portion 20b. The cover 10 is formed of a non-metallic material. For example, the cover 10 is formed of a resin which does not contain metal. Since the cover 10 is formed of a non-metallic material having permeability to electric waves, even if the accommodation portion 8 is formed of a magnetic material, wireless communication can be performed via the antenna 12a of the wireless communication circuit 12.

The portion of the cover 10 opposed to the antenna 12a of the wireless communication circuit 12 may be formed of a non-metallic material, with the other portions formed of a metallic material. In addition, if the circumferential plate portion 20b is omitted, a portion corresponding to the circumferential plate portion 20b may be added to the cover 10 so as to protect the circuit board 9, and to closely engage with the annular side plate portion 20a.

As shown in Fig. 2, the cover 10 and the wireless communication circuit 12 are spaced apart from each other, with a gas layer interposed therebetween. When a dielectric comes into contact with the antenna 12a (see Fig. 5), the radio wave intensity at a specific frequency may be attenuated due to wavelength shortening, thus leading to a decrease in wireless communication performance. By providing a gas layer (typically an air layer) between the antenna 12a and the cover 10, it is possible to prevent or mitigate a reduction in wireless communication performance.

In the absence of such concern, the accommodation portion 8 shown in Fig. 7 may be filled with a sealing material so that the circuit board 9 is embedded, instead of providing the cover 10. In addition, if it is desired to seal the accommodation portion 8 while maintaining the gas layer, the fitting gap between the cover 10 and the accommodation portion 8, as shown in Fig. 2, may be filled with a sealing material. The sealing material can be applied in a liquid state or the accommodation portion 8 or the fitting gap can be filled with the sealing material by injection, provided that the sealing material can be fixed by curing of its resin component. The sealing material preferably has a low dielectric constant, and may be any known sealing or potting material. Examples of the sealing material includes, e.g., epoxy-based adhesives, silicone-based sealing materials, liquid gaskets, epoxy resins, urethane resins, and epoxy resins.

In order to protect the coil shown in Fig. 7, as shown in Figs. 3, 5,and 9, the second coil portion 17b of the coil 17 is covered with a stator cover 25 so as not to be exposed on one side surface of the sensor unit 4. The stator cover 25 is fitted among the annular plate portion 20c, both circumferential ends of the circumferential plate portion 20b, both circumferential ends of the cover 10, and the second side wall 16d.

The stator cover 25 is formed of a metal plate. Even if electromagnetic noise is radiated from the second coil portion 17b of the coil 17, the metal stator cover 25 serves as an electromagnetic shield to reduce the diffusion of the noise to the outside of the sensor unit 4.

Instead of providing the cover 10 and the stator cover 25 as two separate members, the cover 10 and the stator cover 25 may be provided as a single seamless member (e.g., formed of a resin).

Instead of the stator cover 25, the second coil portion 17b and other associated components may be covered with the above-described sealing material so that the coil 17 is not exposed.

When assembling the sensor unit 4, the coil 17 is wound in advance around the partition 22d of the circular arc-shaped bobbin 22 shown in Fig. 5, and then this is placed onto the annular side plate portion 20a through the space between the annular plate portion 20c of the first magnetic member 20 and the first claw poles 16a. At this time, the slit 22c of the circular arc-shaped bobbin 22 and the respective holes 20d are in axial communication with each other.

Next, as shown in Figs. 6 and 7, the second magnetic member 21 is axially combined with the first magnetic member 20. At this time, the connection wall 16e of the second magnetic member 21 is inserted through the slit 22c of the circular arc-shaped bobbin 22 , so that the protrusions of the connection wall 16e are fitted into the respective holes 20d of the first magnetic member 20, and the portions of the connection wall 16e other than the protrusions are brought into axial abutment with the annular side plate portion 20a. This fitting enables the first magnetic member 20 and the second magnetic member 21 to be arranged coaxially with each other, and enables the first claw poles 16a and the second claw poles 16b to be arranged at a predetermined phase so as to be circumferentially spaced part from each other. Accordingly, the first magnetic member 20 and the second magnetic member 21 can be appropriately combined together without using a jig. When the first magnetic member 20 and the second magnetic member 21 are combined together as described above, the accommodation portion 8, which is open between the annular side plate portion 20c and the circumferential plate portion 20b, is defined.

As a fixing means for fixing the protrusions of the connection wall 16e to the respective holes 20d, press-fitting, bonding, laser welding, or other suitable means may be used, either alone or in an appropriate combination.

It is preferable that the holes 20d and the protrusions of the connection wall 16e be formed at three or more circumferentially spaced apart positions. In addition, if the circular arc-shaped bobbin 22 is omitted, the holes 20d and the protrusions of the connection wall 16e can also be omitted. In this case, with the first and second magnetic members aligned coaxially and in phase using a jig (not shown), the abutment portions between the annular side plate portion and the connection wall may be fixed by bonding, laser welding, or other suitable means.

In addition, the insulating sheet 23 and the circuit board 9 are placed onto the annular side plate portion 20a shown in Fig. 5. At this time, the insulating sheet 23 is fixed to the annular side plate portion 20a with an adhesive. Further, among the two surfaces of the circuit board 9, the surface opposite from the surface on which an electronic component, such as the sensor 11, is mounted is opposed to the annular side plate portion 20a, and the circuit board 9 is fixed to the insulating sheet 23 with an adhesive. As shown in Figs. 7 to 9, as a result of this fixing, the stator 7 and the entire circuit board 9, which includes the sensor 11, the wireless communication circuit 12, and the power supply circuit 13, are arranged along a common circumference extending in the circumferential direction. The circuit board 9 and the insulating sheet 23 may be fixed by bonding, screwing, or other suitable means. Either before or after this fixing, both ends of the coil 17 and the terminals 24 of the circuit board 9 are soldered.

Then, as shown in Fig. 3, the cover 10 and the stator cover 25, which are shown in Fig. 5, are respectively fixed to the first magnetic member 20. The cover 10 is fitted between the annular plate portion 20c and the circumferential plate portion 20b. The stator cover 25 is fitted among the annular plate portion 20c, the circumferential plate portion 20b, and the second side wall 16d. These fixings can be performed by press-fitting, bonding, screwing, or other suitable means. By fixing the cover 10, the space between the cover 10 and the antenna 12a is filled with air.

As shown in Figs. 2, 6, and 9, the completed sensor unit 4 and the magnetic ring 6 are attached, respectively, to their corresponding counterpart member 3 and rotary member 1 so as not to have a portion protruding axially and radially beyond the bearing 2.

As shown in Fig. 2, the rotary member 1 and the counterpart member 3 have, respectively, stepped ends 1b and 3b radially opposed to each other. The stepped ends 1b and 3b are formed to enable the sensor unit 4 and the magnetic ring 6 to be radially opposed to each other, by expanding the annular space between the rotary member 1 and the counterpart member 3 at one end of each member.

The annular plate portion 20c of the sensor unit 4 is fitted to the stepped end 3b of the counterpart member 3. The annular plate portion 20c can be fixed to the stepped end 3b of the counterpart member 3 by appropriately using one or more means, such as press-fitting, bonding, or laser spot welding.

The magnetic ring 6 is fitted to the stepped end 1b of the rotary member 1. The magnetic ring 6 may be fixed to the stepped end 1b of the rotary member 1 by appropriately using any of press-fitting, bonding, or other suitable means.

By fixing the sensor unit 4 and the magnetic ring 6, respectively, to the corresponding stepped ends 3b and 1b of the counterpart member 3 and the rotary member 1, the rotary member 1, the counterpart member 3, the sensor unit 4, and the magnetic ring 6 are arranged coaxially.

A distance having a predetermined value or more is ensured between the sensor unit 4 and the rolling elements 14, as well as between the sensor unit 4 and the cage 15. This distance is set to prevent the sensor unit 4 from coming into contact with the rolling elements 14 and the cage 15, even if axial displacement occurs due to internal bearing clearance.

As shown in Figs. 2, 6, and 9, the sensor unit 4 and the magnetic ring 6 are arranged in a positional relationship in which the two members 4 and 6 are radially opposed to each other and do not axially overlap with each other. Accordingly, the axial width of the space required for arranging the sensor unit 4 and the magnetic ring 6 is smaller than in the case where the two members 4 and 6 overlap axially with each other.

In addition, as shown in Figs. 1, 7, and 8, since the stator 7 has a finite circumferential length, the stator 7, the sensor 11, the wireless communication circuit 12, and the power supply circuit 13 can be arranged along a common circumference. With this arrangement, the stator 7, the sensor 11, the wireless communication circuit 12, and the power supply circuit 13 can be disposed at the same axial position without increasing the outer diameter of the sensor unit 4, thereby reducing the axial width of the sensor unit 4.

That is, if electronic components having a large mounting area, such as the wireless communication circuit 12, which includes the antenna 12a, and the power supply circuit 13, which includes a rectifier circuit portion and other associated components, are arranged, there is a limitation on reducing the radial width of the circuit board on which these components are mounted. If the yoke 16 of the stator 7 is provided to extend around the entire circumference, as in the conventional structure, the radial width of the space required for arranging the circuit board 9, on which components, such as the sensor 11 and the wireless communication circuit 12, are mounted, cannot be ensured unless the outer diameter of the sensor unit 4 is increased. Accordingly, the stator 7, the sensor 11, and other associated components cannot be disposed at the same axial position. On the other hand, if the outer diameter of the sensor unit 4 is increased, the annular space between the counterpart member 3 and the rotary member 1 must be radially expanded by an amount corresponding to this increase. However, if a small bearing having a bearing outer diameter of 80 mm or less in the standard bearing is used as the bearing 2, as shown in Figs. 2 and 8, the radially expandable amount of the annular space is limited by the stepped ends 1b and 3b of the rotary member 1 and the counterpart member 3. Therefore, it is not possible to ensure the radial width of the space required for arranging the sensor 11, the wireless communication circuit 12, and other associated components.

In contrast, if the stator 7 has a finite circumferential length as shown in Figs. 1, 7 and 8, it is possible to increase, by an amount corresponding to the radial width of the yoke 16, the radial width of the space available for arranging the sensor 11, the wireless communication circuit 12, and other associated components (in the shown example, the thus-increased radial width corresponds to the radial distance between the annular plate portion 20c and the circumferential plate portion 20b) in the circumferential region where the stator 7 is not disposed. As a result, the sensor 11, the wireless communication circuit 12, and other associated components can be arranged along a common circumference (i.e., arranged at the same axial position) without increasing the outer diameter of the sensor unit 4. Accordingly, even if the standard small bearing is used as the bearing 2, as described above, the sensor unit 4 and the magnetic ring 6 can be arranged so as not to protrude axially and radially from the bearing 2, which is formed as both a standard bearing and a small bearing, by (i) reducing the axial width of the space required for arranging the sensor unit 4 and the magnetic ring6; (ii) reducing the axial width of the sensor unit 4 by arranging the stator 7, the sensor 11, the wireless communication circuit 12, and other associated components at the same axial position without increasing the outer diameter of the sensor unit 4; and (iii) increasing the radial width of the annular space for radially arranging the sensor unit 4 and the magnetic ring 6 so as to be opposed to each other by the stepped ends 1b and 3b of the rotary member 1 and the counterpart member 3. Accordingly, the axial width and the inner and outer diameters of this bearing device can be set to dimensions equivalent to the key dimensions of both a standard bearing and a small bearing.

As described above, this bearing device (see Figs. 1, 2, and 6 to 9) comprises a rotary member 1; a bearing 2 rotatably supporting the rotary member 1; a counterpart member 3 arranged coaxially with the rotary member 1; a sensor unit 4 attached to the counterpart member 3; and a power generator 5 configured to convert rotary motion of the rotary member 1 into alternating-current power, wherein the sensor unit 4 accommodates a sensor 11, a wireless communication circuit 12 configured to transmit a detection result of the sensor 11, and a power supply circuit 13 configured to convert the alternating-current power into direct-current power, wherein the power generator 5 includes a magnetic ring 6 configured to rotate in unison with the rotary member 1; and a stator 7 disposed in the sensor unit 4, and wherein the magnetic ring 6 and the stator 7 are arranged at positions radially opposed to each other.

In this bearing device, in particular, the stator 7 has a finite circumferential length, and the stator 7, the sensor11, the wireless communication circuit 12, and the power supply circuit 13 are arranged along a common circumference. Accordingly, the width of the sensor unit 4 can be reduced without increasing the diameter of the sensor unit 4. As a result, the space required for arranging the sensor unit 4 and the magnetic ring 6 is reduced.

In this way, this bearing device, in which the magnetic ring 6 is attached to the rotary member 1, and the sensor unit 4, which includes the sensor 11, the wireless communication circuit 12, the power supply circuit 13, and the stator 7, is attached to the counterpart member 3 so that the stator 7 and the magnetic ring 6 are radially opposed to each other, the dimensions of the sensor unit 4 can be limited so as to reduce the space required for arranging the sensor unit 4 and the magnetic ring 6. Thus, even if the bearing 2, configured as both a standard bearing and a small bearing, is used, this configuration facilitates the accommodation of the sensor unit 4 and the magnetic ring 6 between the rotary member 1 and the counterpart member 3 so that the sensor unit 4 and the magnetic are radially opposed to each other.

In addition, in this bearing device, the stator 7 includes a yoke 16 and a coil 17 which are arranged at positions radially opposed to the magnetic ring 6, wherein the yoke 16 includes first claw poles 16a and second claw poles 16b alternately arranged at circumferential intervals; a first side wall 16c extending radially from the first claw poles 16a toward the side opposite from the magnetic ring; a second side wall 16d extending radially from the second claw poles 16b toward the side opposite from the magnetic ring; and a connection wall 16e extending between the first side wall 16c and the second side 16d wall, with a finite circumferential length, and wherein the coil 17 includes a first coil portion 17a circumferentially extending between the first side wall 16c and the second side wall 16d, and a second coil portion 17b circumferentially extending through a position opposite from the magnetic ring 6 beyond the connection wall 16e, and the coil 17 is arranged around the connection wall 16e. Accordingly, the claw-pole power generator 5 can have a finite circumferential length.

In addition, in this bearing device, the yoke 16 comprises a first magnetic member 20, and a second magnetic member 21 having a finite circumferential length, wherein the first magnetic member 20 includes an annular side plate portion 20a including the first side wall 16c; the first claw poles16a , which are located on the side of the annular side plate portion 20a closer to the magnetic ring 6, which extend toward one axial side; a circumferential plate portion 20b located on the side of the annular side plate portion 20a closer to the magnetic ring 6, and extending toward one axial side, the circumferential plate portion extending circumferentially along a common circumference to the first claw poles 16a so as to have a finite circumferential length; and an annular plate portion 20c located on a side of the annular side plate portion 20a opposite from the magnetic ring 6, and extending toward one axial side, wherein the second magnetic member 21 includes the second side wall 16d; the second claw poles 16b, which are located on the side of the second side wall 16d closer to the magnetic ring 6, and which extend toward the other axial side; and the connection wall 16e, which is located on a side of the second side wall 16d opposite from the magnetic ring 6, and which extend toward the other axial side, and wherein the sensor 11, the wireless communication circuit 12, and the power supply circuit 13 are accommodated between the annular plate portion 20c and the circumferential plate portion 20b of the first magnetic member 20. Accordingly, the accommodation portion 8 for accommodating the sensor 11, other associated components, and the yoke 16 can be arranged along the common circumference with only the first magnetic member 20 and the second magnetic member 21, that is, with two members.

In addition, in this bearing device, the sensor unit 4 includes a circular arc-shaped bobbin 22 axially superposed on the annular side plate portion 20a, wherein the circular arc-shaped bobbin 22 has a first groove 22a that radially supports the first coil portion 17a; a second groove 22b that radially supports the second coil portion17b; and a partition 22d having a slit 22c formed between the first groove 22a and the second groove 22b, the slit 22c axially extending through the partition, and wherein the connection wall 16e extends through the slit 22c so as to reach the annular side plate portion 20a. Accordingly, it is possible both to maintain the coil 17 in a form arranged around the connection wall 16e with the support of the circular arc-shaped bobbin 22 and to form the yoke 16 by combining the first magnetic member 20 and the second magnetic member 21.

In addition, in this bearing device, the rotary member 1 comprises a first raceway ring, the counterpart member 3 comprises a second raceway ring, and the bearing 2 is a rolling bearing including rolling elements 14 arranged between the rotary member 1 and the counterpart member 3, wherein the rotary member 1 and the counterpart member 3 have stepped ends 1b and 3b opposed radially to each other, wherein the magnetic ring 6 is fitted to the stepped end 1b of the rotary member 1 so as not to protrude axially from the rotary member 1, and wherein the sensor unit 4 is fitted to the stepped end 3b of the counterpart member 3 so as not to protrude axially from the counterpart member 3. Accordingly, the sensor unit 4 and the magnetic ring 6 can be accommodated in the bearing 2 without increasing the outer diameter of the bearing 2, by utilizing the expanded annular space in the bearing created by the stepped ends 1b and 3b of the rotary member 1 and the counterpart member 3. Thus, it is possible to realize a compact bearing device.

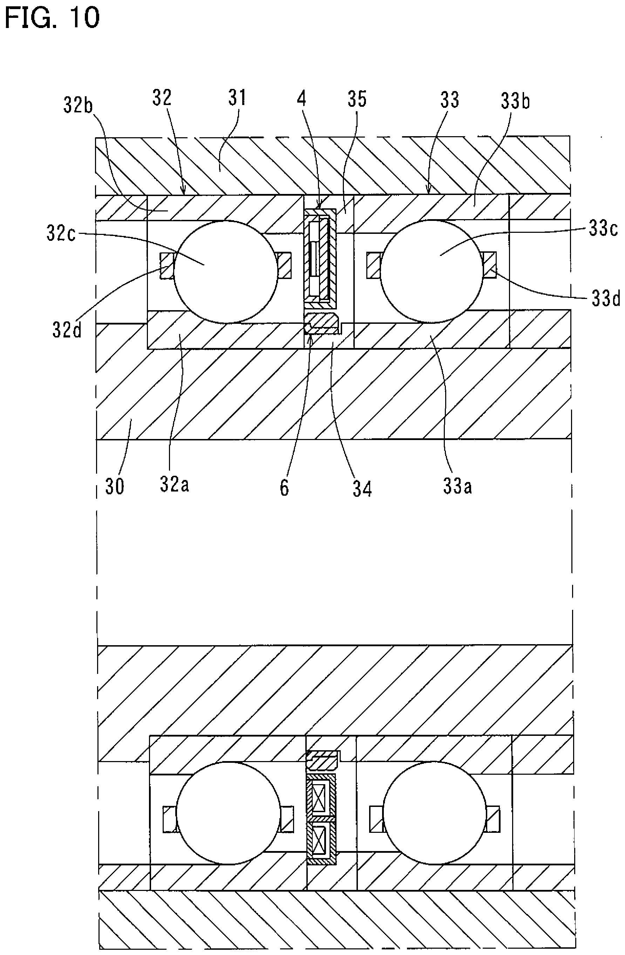

The bearing device according to the second embodiment as another example of the present invention is shown in Fig. 10. Only the features of the second embodiment that are different from those of the first embodiment are described below.

The bearing device according to the second embodiment is in the form of a spindle that supports a rotary shaft 30 so as to be rotatable relative to a housing 31. A plurality of bearings 32 and 33 are interposed between the rotary shaft 30 and the housing 31. In addition, a rotary member 34 in the form of a rotary-side spacer for maintaining the axial interval between these bearings 32 and 33, and a counterpart member 35 in the form of a stationary-side spacer, similarly for maintaining the axial interval between the bearings 32 and 33, are accommodated between the rotary shaft 30 and the housing 31.

The bearings 32 and 33 are angular contact ball bearings each corresponding to both a standard bearing and a small bearing, and including an inner ring 32a, 33a; an outer ring 32b, 33b; rolling elements 32c, 33c; and a cage 32d, 33d, and the bearings 32 and 33 are arranged in a back-to-back relationship.

The rotary member 34 is axially sandwiched between the inner rings 32a and 33a. The inner and outer diameters of the rotary member 34 are equal to or substantially equal to the inner and outer diameters of each of the inner rings 32a and 33a. The counterpart member 35 is axially sandwiched between the outer rings 32b and 33b. The inner and outer diameters of the counterpart member 35 are equal to or substantially equal to the inner and outer diameters of each of the outer rings 32b and 33b.

The sensor unit 4 is fitted to a stepped end formed in the counterpart member 35. The magnetic ring 6 is fitted to a stepped end formed in the rotary member 34.

Since the rotary-side spacer and the stationary-side spacer sandwiched between the small bearings experience low load and have a short bearing span, the spacers may not have large inner diameters, large outer diameters, or large axial widths. In such a case, as in the case where the sensor unit and the magnetic ring are attached to the ends of the raceway rings of the small bearings, the accommodation space for the sensor unit 4 and the magnetic ring 6 is limited. Since the dimensions of the sensor unit 4 have been reduced as described above, the sensor unit 4 and the magnetic ring 6 can be accommodated between the rotary member 34 and the counterpart member 35, which serve as such spacers, so as to be radially opposed to each other.

While the above-described embodiments exemplify the bearing 2, in which the outer ring serves as the stationary ring and the inner ring serves as the rotary ring, an alternative arrangement may be used in which the outer ring serves as the rotary ring, the inner ring serves as the stationary ring, the sensor unit is attached to the stationary inner ring, and the magnetic ring is attached to the rotary outer ring.

In addition, the above-described embodiments exemplify the case where the magnetic ring is attached to the rotary ring or the rotary-side spacer. Since power generation is possible as long as the rotary member and the counterpart member rotate relative to each other, and the sensor unit is wireless, an alternative arrangement may be used in which the rotary ring or the rotary-side spacer serves as the counterpart member, to which the sensor unit is attached, and the stationary ring or the stationary-side spacer serves as the rotary member, to which the magnetic ring is attached.

The above-described embodiments are mere examples in every respect, and the present invention is not limited thereto. The scope of the present invention is indicated by not the above description but the claims, and should be understood to include all modifications within the meaning and scope equivalent to the scope of the claims.

### DESCRIPTION OF REFERENCE NUMERALS

1, 34: Rotary member
2, 32, 33: Bearing
3, 35: Counterpart member
4: Sensor unit
5: Power generator
6: Magnetic ring
7: Stator
11: Sensor
12: Wireless communication circuit
13: Power supply circuit
14: Rolling element
16: Yoke
16a: First claw pole
16b: Second claw pole
16c: First side wall
16d: Second side wall
16e: Connection wall
17: Coil
17a: First coil portion
17b: Second coil portion
20: First magnetic member
21: Second magnetic member
22: Circular arc-shaped bobbin
22a: First groove
22b: Second groove
22c: Slit
22d: Partition

## Claims

1. A bearing device comprising:
a rotary member;
a bearing rotatably supporting the rotary member;
a counterpart member arranged coaxially with the rotary member;
a sensor unit attached to the counterpart member; and
a power generator configured to convert rotary motion of the rotary member into alternating-current power,
wherein the sensor unit accommodates a sensor, a wireless communication circuit configured to transmit a detection result of the sensor, and a power supply circuit configured to convert the alternating-current power into direct-current power,
wherein the power generator includes a magnetic ring configured to rotate in unison with the rotary member; and a stator disposed in the sensor unit, and
wherein the magnetic ring and the stator are arranged at positions radially opposed to each other,
**characterized in that** the stator has a finite circumferential length, and the stator, the sensor, the wireless communication circuit, and the power supply circuit are arranged along a common circumference.

2. The bearing device according to claim 1, wherein the stator includes a yoke and a coil which are arranged at positions radially opposed to the magnetic ring,
wherein the yoke includes:
first claw poles and second claw poles alternately arranged at circumferential intervals;
a first side wall extending radially from the first claw poles toward a side opposite from the magnetic ring;
a second side wall extending radially from the second claw poles toward the side opposite from the magnetic ring; and
a connection wall extending between the first side wall and the second side wall, with a finite circumferential length, and
wherein the coil includes a first coil portion circumferentially extending between the first side wall and the second side wall; and a second coil portion circumferentially extending through a position opposite from the magnetic ring beyond the connection wall, and the coil is arranged around the connection wall.

3. The bearing device according to claim 2, wherein the yoke comprises a first magnetic member; and a second magnetic member having a finite circumferential length,
wherein the first magnetic member includes:
an annular side plate portion including the first side wall;
the first claw poles, which are located on a side of the annular side plate portion closer to the magnetic ring, and which extend toward a first axial side;
a circumferential plate portion located on the side of the annular side plate portion closer to the magnetic ring, and extending toward the first axial side, the circumferential plate portion extending circumferentially along a common circumference to the first claw poles so as to have a finite circumferential length; and
an annular plate portion located on a side of the annular side plate portion opposite from the magnetic ring, and extending toward the first axial side,
wherein the second magnetic member includes:
the second side wall;
the second claw poles, which are located on a side of the second side wall closer to the magnetic ring, and which extend toward a second axial side; and
the connection wall, which is located on a side of the second side wall opposite from the magnetic ring, and which extends toward the second axial side, and
wherein the sensor, the wireless communication circuit, and the power supply circuit are accommodated between the annular plate portion and the circumferential plate portion of the first magnetic member.

4. The bearing device according to claim 3, wherein the sensor unit includes a circular arc-shaped bobbin axially superposed on the annular side plate portion,
wherein the circular arc-shaped bobbin has:
a first groove radially supporting the first coil portion;
a second groove radially supporting the second coil portion; and
a partition having a slit formed between the first groove and the second groove, the slit axially extending through the partition, and
wherein the connection wall extends through the slit so as to reach the annular side plate portion.

5. The bearing device according to any one of claims 1 to 4, wherein the rotary member comprises a first raceway ring, the counterpart member comprises a second raceway ring, and the bearing is a rolling bearing including rolling elements arranged between the rotary member and the counterpart member,
wherein the rotary member and the counterpart member have stepped ends opposed radially to each other,
wherein the magnetic ring is fitted to the stepped end of the rotary member so as not to protrude axially from the rotary member, and
wherein the sensor unit is fitted to the stepped end of the counterpart member so as not to protrude axially from the counterpart member.
